(19) Europäisches Patentamt
European Patent Office
Office européen des brevets

(11) **EP 3 428 477 A1**

(12) **EUROPEAN PATENT APPLICATION**

(43) Date of publication:
**16.01.2019 Bulletin 2019/03**

(51) Int Cl.:
***F16F 9/46*** *(2006.01)*     ***F16F 7/01*** *(2006.01)*

(21) Application number: **17001190.2**

(22) Date of filing: **12.07.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
- **KYB Corporation**
  **Tokyo 105-6111 (JP)**
- **Nagoya Institute Of Technology**
  **Nagoya-shi, Aichi 466-8555 (JP)**

(72) Inventors:
- **Oota, Akihisa**
  **Tokyo, 105-6111 (JP)**

- **Sekine, Shinichi**
  **Tokyo, 105-6111 (JP)**
- **Toyouchi, Atsushi**
  **Tokyo, 105-6111 (JP)**
- **Fukuzawa, Yuji**
  **Nagano, 389-0688 (JP)**
- **Ido, Yasushi**
  **Nagoya-shi, Aichi, 466-8555 (JP)**
- **Iwamoto, Yuhiro**
  **Nagoya-shi, Aichi, 466-8555 (JP)**

(74) Representative: **Müller-Boré & Partner**
**Patentanwälte PartG mbB**
**Friedenheimer Brücke 21**
**80639 München (DE)**

(54) **DAMPER**

(57) A damper which can successfully generate damping force and easily adjust the damping force is provided.

The damper includes a cylinder 10, a rod 50, elastomer particles 90, and a magnetic field generating unit 20. The rod 50 which is reciprocally movable in an axial direction or rotatable around an axis projects outside from the cylinder 10. The elastomer particles 90 have characteristics of a permanent magnet and elasticity and a plurality of elastomer particles 90 are filled in the cylinder 10. The magnetic field generating unit 20 generates a predetermined magnetic field in the cylinder 10.

Fig. 1

Printed by Jouve, 75001 PARIS (FR)

**Description**

TECHNICAL FIELD

The present invention relates to a damper.

BACKGROUND ART

Patent Literature 1 discloses a conventional damper. This damper has a structure in which steel balls serving as particles are filled in a space surrounded by a cylinder and one pair of caps and a piston is displaced relatively to the cylinder in the space filled with the particles with the movement of a rod. The pair of caps are always biased by one pair of springs, respectively, in such a direction that the volume of the space filled with the particles decreases. An electromagnet is disposed on the outer periphery of the cylinder.

In this damper, when the rod is displaced so that the piston is displaced relatively to the cylinder, the particles flow with the movement of the piston so that frictional force between pieces of the particles and between the particles and the piston or the like is generated, whereby damping force is generated. More specifically, when force required to cause the particles to flow becomes larger than the force biasing the caps by the springs, the caps are displaced to a position where this force is balanced with the force biasing the caps. When the caps are displaced, the capacity of the case filled with the particles increases so that an air gap is generated in the cylinder. As the result, the fluidity of the particles is promoted, and the piston moves pushing away the particles so that damping force is generated.

Furthermore, when current is caused to flow in the electromagnet of the damper, the bonding force of the particles in the direction along the direction of magnetic lines of the electromagnet is enhanced. As the result, frictional force between pieces of the particles becomes large, and accordingly the damping force of the damper becomes large. Thus, the characteristics of damping force to be generated can be changed in this damper by controlling the magnitude of current flowing in the electromagnet.

CITATION LIST

PATENT LITERATURE

Patent Literature 1: Japanese Unexamined Patent Application Publication No. 2011-21648

SUMMARY OF INVENTION

TECHNICAL PROBLEMS

In a damper according to Patent Literature 1, steel balls serving as particles are filled in the cylinder. The steel balls have no flexibility. Therefore, when the particles are compressed by one pair of caps, seizure between adjacent particles may be caused. Accordingly, there is a possibility that the particles cannot flow in the cylinder and movement of the piston is hindered with the result that this damper cannot generate damping force.

The present invention has been made in consideration of the above conventional circumstances and has an object to provide a damper which can successfully generate damping force and easily adjust the magnitude of the damping force to be generated.

SOLUTIONS TO THE PROBLEMS

The damper according to the present invention includes a case, a rod, particles, and a magnetic field generating unit. The rod which is reciprocally movable in an axial direction or rotatable around an axis projects outside from the case. The particles have characteristics of a permanent magnet and elasticity and a plurality of particles are filled in the case. The magnetic field generating unit generates a predetermined magnetic field in the case.

In this damper, when the rod reciprocally moves in the axial direction or rotates around the axis, the plurality of particles having characteristics of a permanent magnet and elasticity which are filled in the case are elastically deformed. Frictional force between the particles and elastic repulsive force of the particles generated at this time allow the damper to generate damping force. Since the particles have elasticity, the adjacent particles are elastically deformed so that seizure between the particles is less likely to be caused.

Furthermore, bonding force between the plurality of particles is enhanced by the magnetic field generated in the case by the magnetic field generating unit and the characteristics of a permanent magnet which the particles each have. As the result, frictional force between the plurality of particles becomes much larger, and accordingly the damping force of the damper becomes much larger.

Thus, the damper according to the present invention can successfully generate damping force and easily adjust the damping force.

The magnetic field generating unit of the damper according to the present invention may freely change strength of the magnetic field generated in the case. In this case, when the strength of the magnetic field generated by the magnetic field generating unit is changed in this damper, the bonding force between the particles changes, with the result that the magnitude of damping force can be easily changed into a desired magnitude.

The damper according to the present invention may include a piston which is disposed in the case and coupled to the rod reciprocally movable in the axial direction, and reciprocally moves in the case together with the rod. In this case, the piston moves pushing away the particles filled in the case. As the result, the damper can generate much larger damping force as compared with the case where the piston is not provided.

The damper according to the present invention may include a rotor which is disposed in the case and coupled to the rod rotatable around the axis, and rotates in the case together with the rod. In this case, when the rod and the rotor rotate around the axis, the particles filled in the case are elastically deformed. Frictional force between the particles and elastic repulsive force of the particles generated at this time allow the damper to generate damping force in a direction opposite to a rotational direction of the rod and the rotor.

The piston may have characteristics of a permanent magnet. In this case, since frictional force between the piston having characteristics of a permanent magnet and the particles in contact with the surface of the piston becomes much larger in the damper, the damping force of the damper can be made much larger.

The rotor may have characteristics of a permanent magnet. In this case, since frictional force between the rotor having characteristics of a permanent magnet and the particles in contact with the surface of the rotor becomes much larger in the damper, the damping force of the damper can be made much larger.

BRIEF DESCRIPTION OF THE DRAWINGS

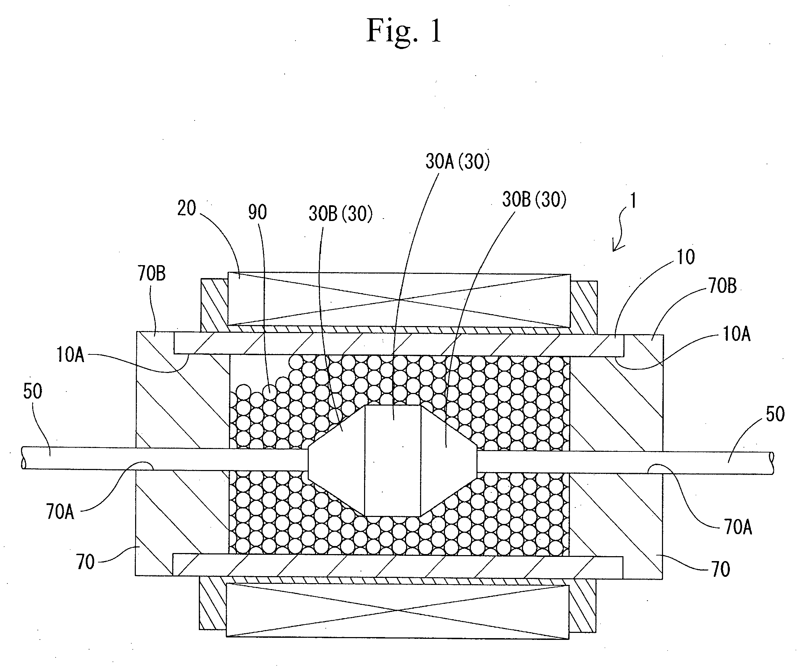

Fig. 1 is a sectional view showing a damper according to a first embodiment.

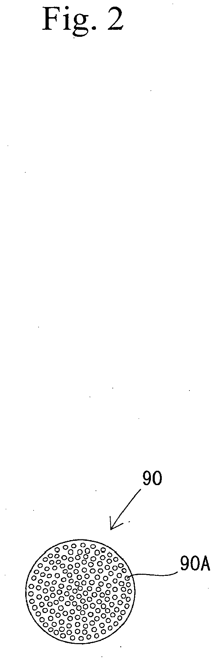

Fig. 2 is a schematic diagram of particles filled in a case of the damper according to the first embodiment.

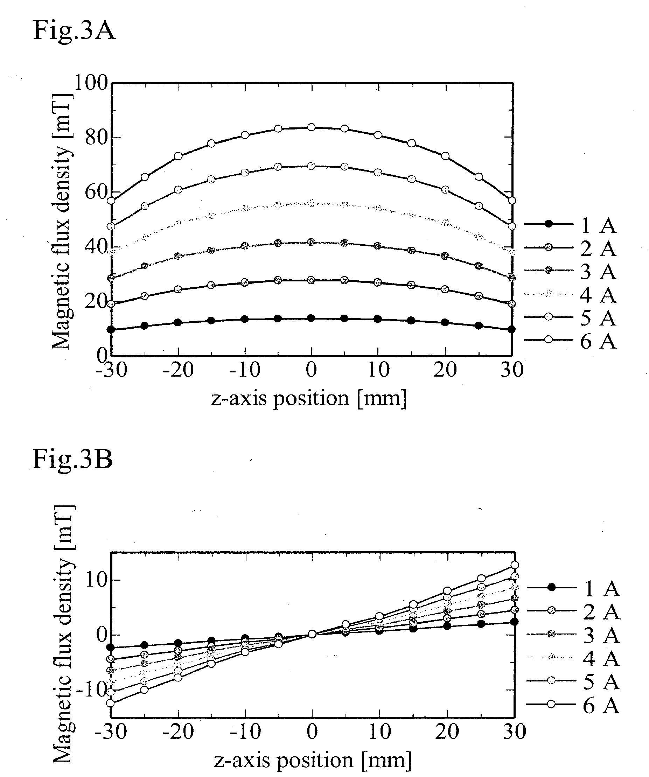

Figs. 3A and 3B are graphs showing magnitude of magnetic flux density near a central axis of a cylinder when magnitude of current flowing in a magnetic field generating unit of the damper according to the first embodiment is changed every predetermined magnitude, in which Fig. 3A shows the magnitude of magnetic flux density in the direction of the central axis of the cylinder and Fig. 3B shows the magnitude of magnetic flux density in the direction orthogonal to the central axis of the cylinder (radial direction).

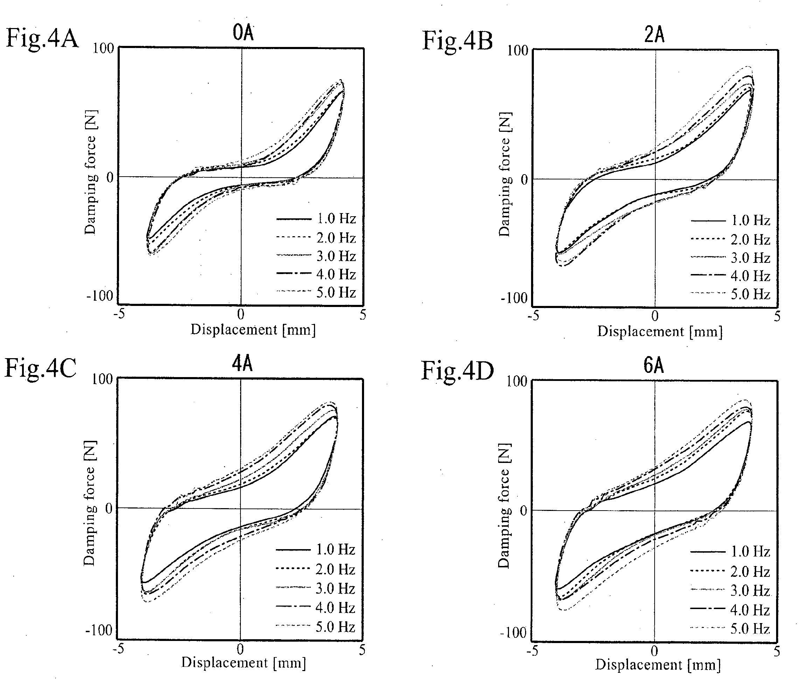

Figs. 4A to 4D are graphs showing relationship between displacement magnitude of the rod with respect to the cylinder and damping force when the magnitude of the speed (hereinafter to be referred to as frequency) at which the rod is reciprocally moved in the direction of the central axis of the cylinder is changed every predetermined magnitude when the magnitude of the current flowing in the magnetic field generating unit of the damper according to the first embodiment is changed every predetermined magnitude, in which Fig. 4A shows a case where the magnitude of the current flowing in the magnetic field generating unit is 0 A, Fig. 4B shows a case where the magnitude of the current flowing in the magnetic field generating unit is 2 A, Fig. 4C shows a case where the magnitude of the current flowing in the magnetic field generating unit is 4 A, and Fig. 4D shows a case where the magnitude of the current flowing in the magnetic field generating unit is 6 A.

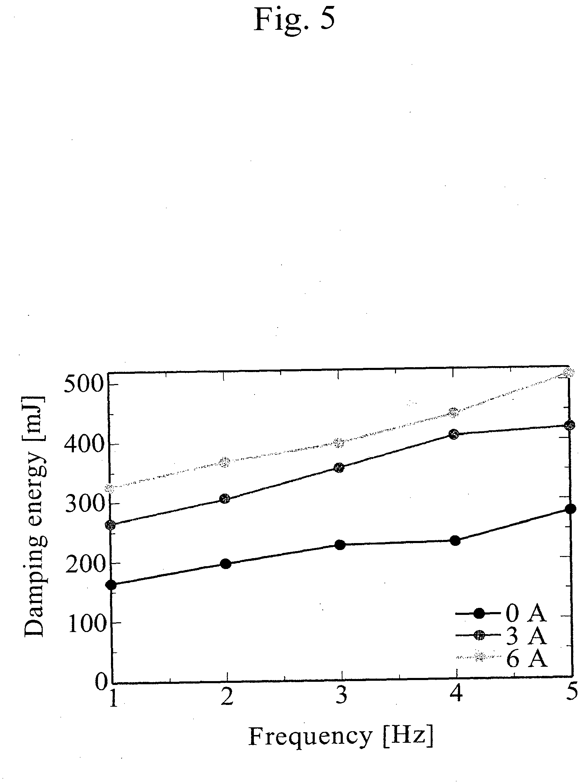

Fig. 5 is a graph showing magnitude of damping energy to the frequency when the magnitude of the frequency is changed between 1 and 5 Hz every 1 Hz when the magnitudes of the current flowing in the magnetic field generating unit of the damper according to the first embodiment are 0, 3, and 6 A.

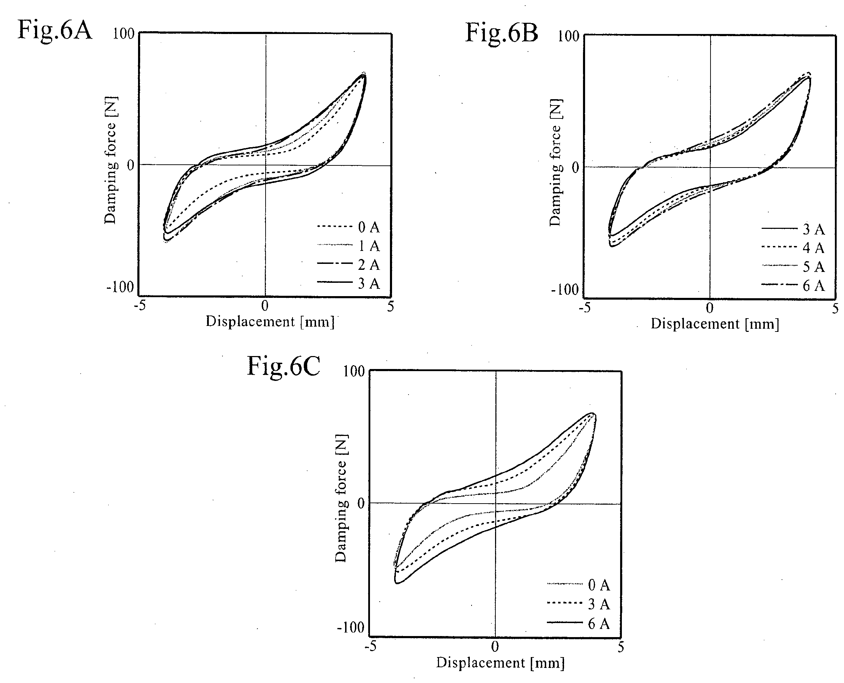

Figs. 6A to 6C are graphs showing relationship between displacement magnitude of the rod with respect to the cylinder and damping force when the magnitude of the current flowing in the magnetic field generating unit of the damper according to the first embodiment is changed every predetermined magnitude when the frequency is 1 Hz, in which Fig. 6A shows a case where the magnitudes of the current flowing in the magnetic field generating unit are 0, 1, 2, and 3 A, Fig. 6B shows a case where the magnitudes of the current flowing in the magnetic field generating unit are 3, 4, 5, and 6 A, and Fig. 6C shows a case where the magnitudes of the current flowing in the magnetic field generating unit are 0, 3, and 6 A.

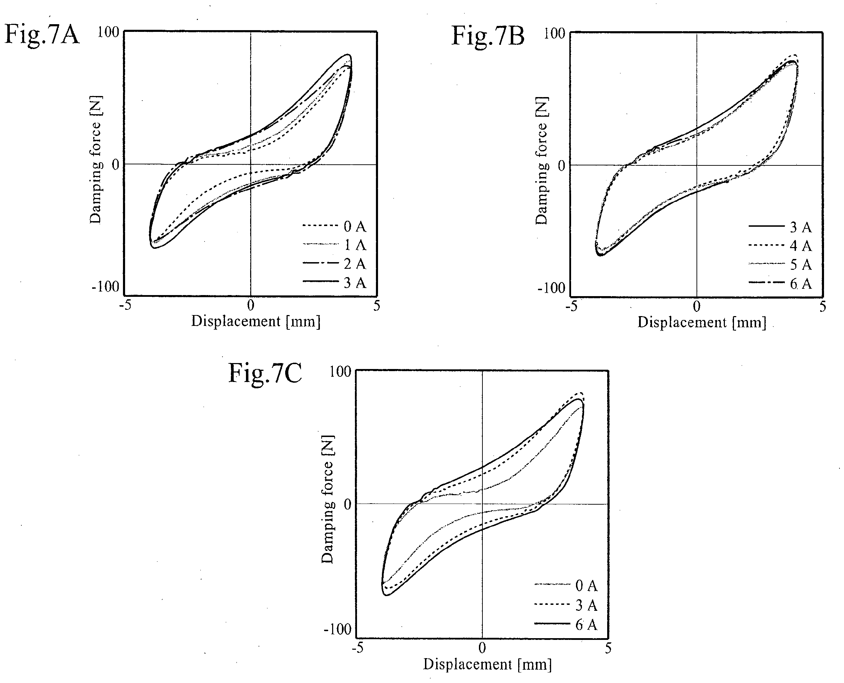

Figs. 7A to 7C are graphs showing relationship between displacement magnitude of the rod with respect to the cylinder and damping force when the magnitude of the current flowing in the magnetic field generating unit of the damper according to the first embodiment is changed every predetermined magnitude when the frequency is 3 Hz, in which Fig. 7A shows a case where the magnitudes of the current flowing in the magnetic field generating unit are 0, 1, 2, and 3 A, Fig. 7B shows a case where the magnitudes of the current flowing in the magnetic field generating unit are 3, 4, 5, and 6 A, and Fig. 7C shows a case where the magnitudes of the current flowing in the magnetic field generating unit are 0, 3, and 6 A.

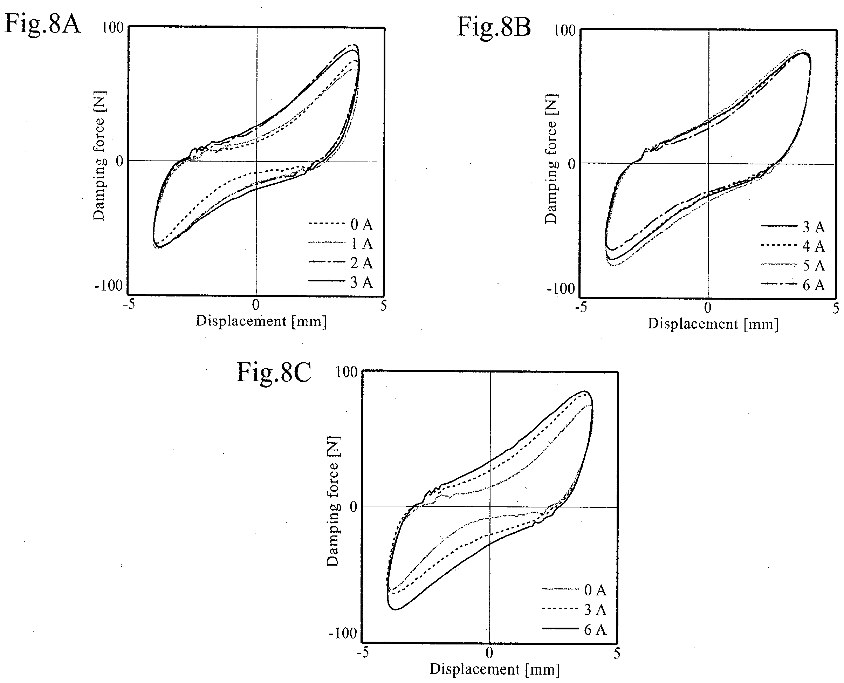

Figs. 8A to 8C are graphs showing relationship between displacement magnitude of the rod with respect to the cylinder and damping force when the magnitude of the current flowing in the magnetic field generating unit of the damper according to the first embodiment is changed every predetermined magnitude when the frequency is 5 Hz, in which Fig. 8A shows a case where the magnitudes of the current flowing in the magnetic field generating unit are 0, 1, 2, and 3 A, Fig. 8B shows a case where the magnitudes of the current flowing in the magnetic field generating unit are 3, 4, 5, and 6 A, and Fig. 8C shows a case where the magnitudes of the current flowing in the magnetic field generating unit are 0, 3, and 6 A.

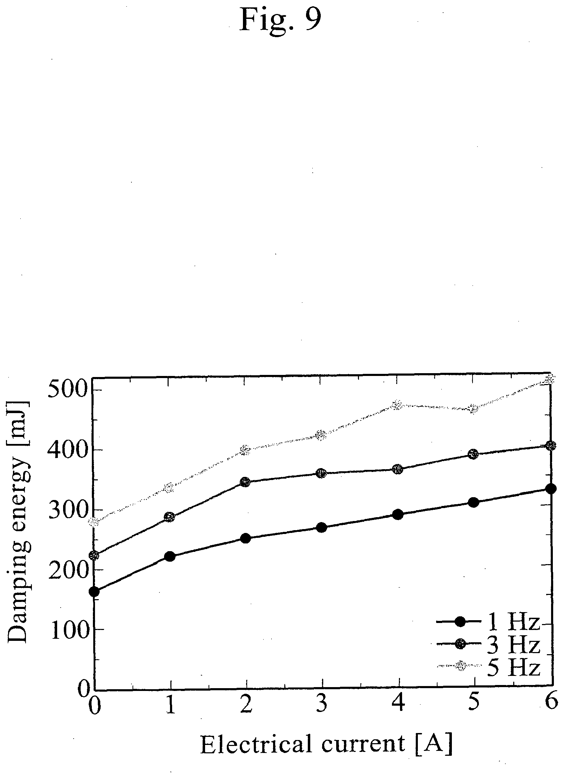

Fig. 9 is a graph showing magnitude of damping energy when the magnitude of the current flowing in the magnetic field generating unit is changed every 1 A between 0 and 6 A when the frequencies of the damper according to the first embodiment are 1, 3, and 5 Hz.

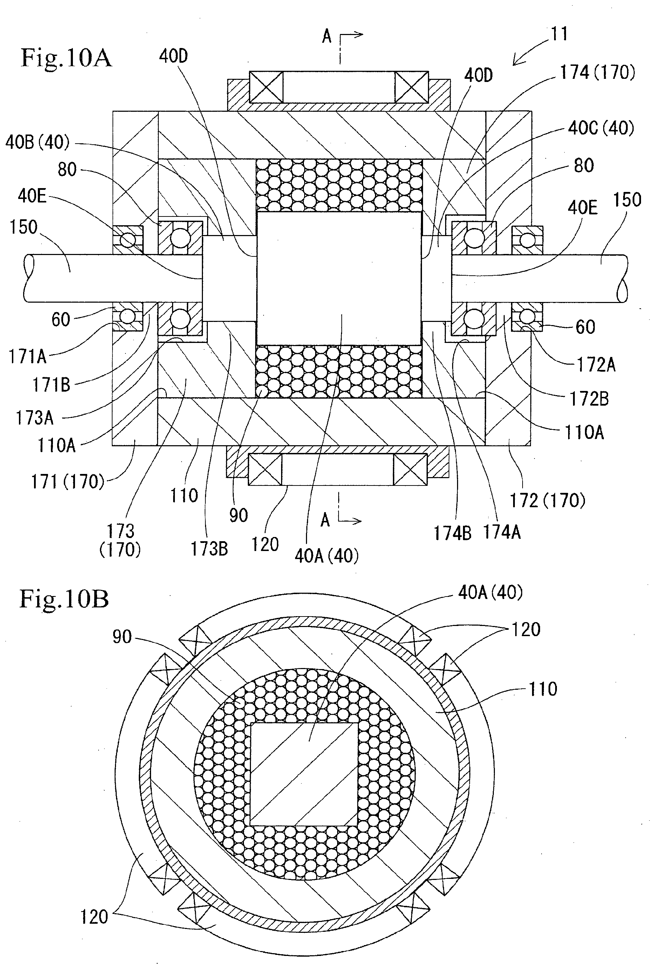

Figs. 10A and 10B are sectional views showing a damper according to a second embodiment, in which Fig. 10A is a sectional view in the direction of the central axis of a rotor and Fig. 10B is a sectional view along an A - A line in Fig. 10A.

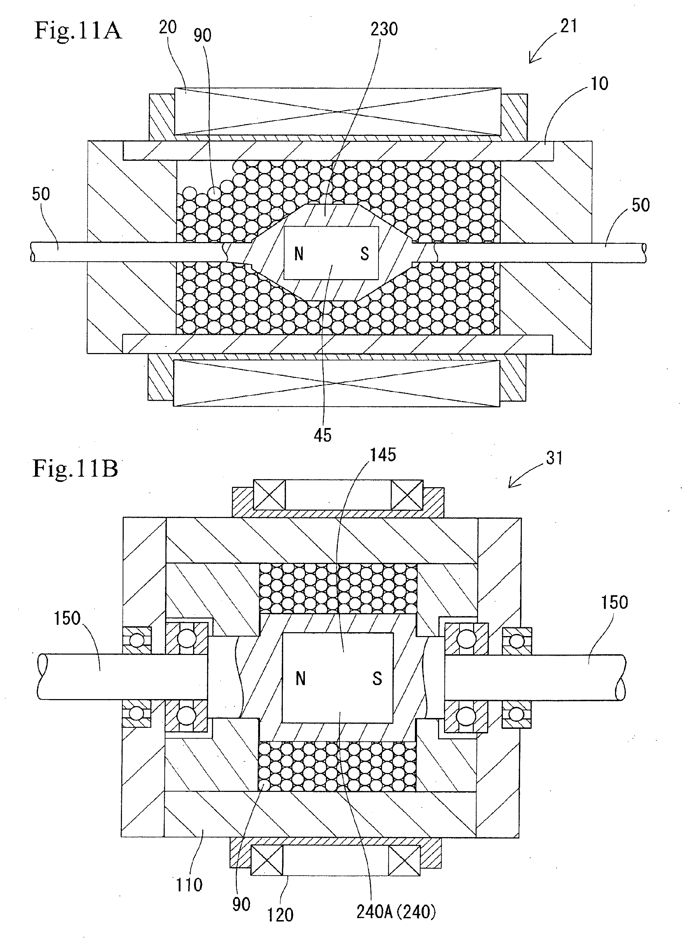

Figs. 11A and 11B are sectional views showing dampers according to third and fourth embodiments, in which Fig. 11A shows the damper in which a magnet is provided in a piston and Fig. 11B shows the damper in which a magnet is provided in a rotor.

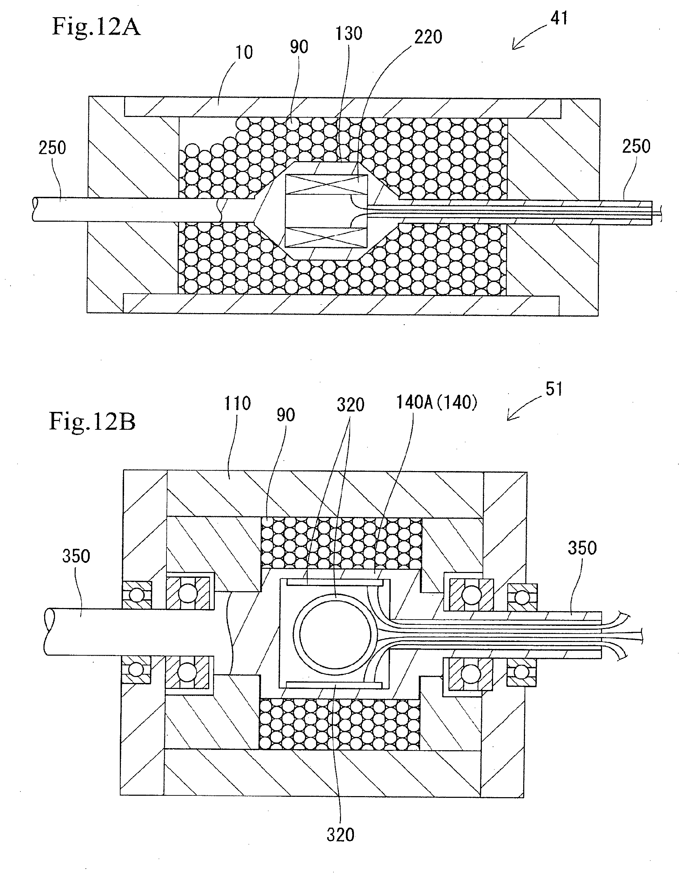

Figs. 12A and 12B are sectional views showing a damper according to other embodiments, in which Fig. 12A shows the damper in which a magnetic field generating unit is provided in a piston and Fig. 12B shows the damper in which a plurality of magnetic field generating units each formed in an annular shape are provided in a rotor.

DESCRIPTION OF EMBODIMENTS

First to fourth embodiments of a damper according to the present invention will be described below with reference to the accompanying drawings.

<First Embodiment>

A damper 1 according to a first embodiment, as shown in Fig. 1, includes a cylinder 10 serving as a case, a piston 30, a rod 50, one pair of rod guides 70, elastomer particles 90 serving as a plurality of particles, and a magnetic field generating unit 20.

The cylinder 10 has a cylindrical shape having openings at both ends thereof. The piston 30 has a central part 30A and both end parts 30B. The central part 30A has a columnar shape. The both end parts 30B each have a truncated cone shape having an outer diameter gradually decreasing in a direction away from corresponding one end face of the central part 30A. A predetermined gap is formed between an outer peripheral surface of the piston 30 and an inner peripheral surface of the cylinder 10. The piston 30 is disposed in the cylinder 10.

The rod 50 has a columnar shape. The rod 50 is coupled to the distal ends of the both end parts 30B of the piston 30 and extends in both directions of the piston 30. The rod 50 extends in the direction of the central axis of the cylinder 10 and projects outside the cylinder 10 from opening ends 10A at both ends of the cylinder 10. That is, the piston 30 is coupled to the rod 50. The rod guides 70 are disk-like shapes each having an outer periphery formed with a flange part 70B and are coupled to the respective opening ends 10A at both ends of the cylinder 10 so as to close the opening ends 10A. The center of the disk-like shape of each rod guide 70 is formed with a through hole 70A penetrating through the rod guide in a thickness direction thereof. The inner diameter of the through hole 70A is slightly larger than the outer diameter of the rod 50. The through holes 70A penetrate in the direction of the central axis of the cylinder 10 in a state where the rod guides 70 are fixed to the respective opening ends 10A at both ends of the cylinder 10. The rod 50 is inserted into the through holes 70A of the rod guides 70 so as to be reciprocally movable. The rod 50 and the piston 30 are reciprocally movable in the cylinder 10 in the direction of the central axis of the cylinder 10. The cylinder 10, the piston 30, the rod 50, and the pair of rod guides 70 are nonmagnetic.

The plurality of elastomer particles 90 each have a spherical shape, as shown in Fig. 2. The elastomer particles 90 are elastic bodies made of silicone rubber having a durometer A hardness (hereinafter to be referred to as a hardness) of 60. The elastomer particles 90 contain neodymium (Nd) particles 90A. The quantity of the neodymium (Nd) particles 90A contained in the elastomer particles 90 is about 60 wt.% (17.78 vol.%). The neodymium (Nd) particles 90A have magnetism. That is, the elastomer particles 90 have magnetism and elasticity. The elastomer particles 90 thus formed are magnetized to have magnetic force. That is, the elastomer particles 90 have characteristics of a permanent magnet. The elastomer particles 90 are filled in a space surrounded by the cylinder 10 and the pair of rod guides 70 (that is, in the cylinder 10) at a packing ratio of 60%.

In this case, the packing ratio is expressed by the following equation (1). A filling volume is the volume of a space in which the elastomer particles 90 are filled.

[Mathematical Equation 1]

$$\text{Packing ratio} = \frac{\text{Mass of elastomer particles 90}}{\text{Filling volume} \times \text{Density of elastomer particles 90}} \quad \cdots (1)$$

The magnetic field generating unit 20 is formed by coaxially winding a metal wire coated with an insulating film by a plurality of turns and bundling the metal wire into a cylindrical shape having a predetermined width in the radial direction, and an inner diameter thereof is slightly larger than the outer diameter of the cylinder 10. Both ends of the metal wire of the magnetic field generating unit 20 are drawn out so that an electric current flows therein (not shown). The cylinder 10 is inserted into the magnetic field generating unit 20 in such a manner that the cylindrical internal side of the magnetic field generating unit 20 is along the outer peripheral surface of the cylinder 10, so that the magnetic field generating unit 20 is disposed on the outer peripheral surface of the cylinder 10.

In the damper 1 formed as described above, when the piston 30 reciprocally moves in the direction of the central axis of the cylinder 10, the elastomer particles 90 move through the predetermined gap between the outer peripheral surface of the piston 30 and the inner peripheral surface of the cylinder 10. At this time, frictional force is generated between the inner peripheral surface of the cylinder 10 and the elastomer particles 90 in contact with the inner peripheral surface of the cylinder 10, between the adjacent elastomer particles 90, and between the outer peripheral surfaces of the rod 50 and the piston 30 and the elastomer particles 90 in contact with the outer peripheral surfaces of the rod 50 and the piston 30. Furthermore, the elastomer particles 90 located at the side to which the piston 30 moves are pushed and flattened by the piston 30. At this time, elastic repulsive force generated by the elastomer particles 90 pushed and flattened by the piston 30 pushes back the piston 30. That is, damping force is generated in the damper 1 on the basis of the frictional force and the elastic repulsive force generated as described above.

Furthermore, when current having a predetermined magnitude is caused to flow in the metal wire drawn out from the magnetic field generating unit 20 of the damper 1, a magnetic field is generated around the magnetic field generating unit 20. At this time, a predetermined magnetic field is generated in the cylinder 10 by the magnetic field generated by the magnetic field generating unit 20 so that magnetic lines extend in the direction of the central axis of the cylinder 10. As the result, bonding force between the elastomer particles 90 filled in the cylinder 10 is enhanced. As the result, frictional force between the elastomer particles 90 becomes large, and accordingly the damping force of the damper 1 becomes large. Furthermore, the strength of the magnetic field generated in the cylinder 10 can be freely changed by changing the magnitude of the current flowing in the metal wire drawn out from the magnetic field generating unit 20. In this manner, when the strength of the magnetic field generated by the magnetic field generating unit 20 is changed in the damper 1, the bonding force between the elastomer particles 90 changes, with the result that the magnitude of damping force can be easily changed into a desired magnitude.

Next, Figs. 3A and 3B show the results obtained by measuring the magnitude of a magnetic flux density near the central axis of the cylinder 10 when the magnitude of the current flowing in the magnetic field generating unit 20 of the damper 1 is changed every predetermined magnitude. More specifically, the magnitude of the current flowing in the magnetic field generating unit 20 of the damper 1 is changed every 1 A in the range of 1 to 6 A to measure a magnetic flux density. Fig. 3A shows the magnitude of the magnetic flux density in the direction of the central axis of the cylinder 10, and Fig. 3B shows the magnitude of the magnetic flux density in the direction orthogonal to the central axis of the cylinder 10 (radial direction).

As shown in Fig. 3A, in any case where the magnitude of the current flowing in the magnetic field generating unit 20 is any one of 1 to 6 A, the magnetic flux density in the direction of the central axis of the cylinder 10 is minimum near the pair of rod guides 70 and increases toward the center of the cylinder 10 in the direction of the central axis. Furthermore, the larger the magnitude of the current flowing in the magnetic field generating unit 20 is, the larger the magnitude of the magnetic flux density becomes.

As shown in Fig. 3B, in any case where the magnitude of the current flowing in the magnetic field generating unit 20 is any one of 1 to 6 A, the magnetic flux density in the direction orthogonal to the central axis of the cylinder 10 (radial direction) increases in a predetermined respective degree from a position near one of the rod guides 70 to a position near the other rod guide 70. More specifically, extending directions of the magnetic lines located in a section from the position near one of the rod guides 70 to the center in the direction of the central axis of the cylinder 10 include components in the direction away from the central axis of the cylinder 10 (radial direction). Furthermore, extending directions of the magnetic lines located in a section from the position near the other rod guide 70 to the center in the direction of the central axis of the cylinder 10 include components in the direction getting close to the central axis of the cylinder 10 (radial direction). Furthermore, in any case where the magnitude of the current flowing in the magnetic field generating unit 20 is any one of 1 to 6 A, the magnetic flux density at the center in the direction of the central axis of the cylinder 10 is almost 0. That is, extending directions of the magnetic lines located at the center in the direction of the central axis of the cylinder 10 are almost parallel to the direction of the central axis of the cylinder 10. Furthermore, the larger the magnitude of the current flowing in the magnetic field generating unit 20 is, the larger the degree of an increase in magnetic flux density becomes.

Next, Figs. 4A to 4D show relationship between displacement magnitude of the rod 50 with respect to the cylinder 10 and damping force when the magnitude of the speed (hereinafter to be referred to as frequency) at which the rod 50 is reciprocally moved in the direction of the central axis of the cylinder 10 is changed every predetermined magnitude when the magnitude of the current flowing in the magnetic field generating unit 20 of the damper 1 is changed every predetermined magnitude. More specifically, the damping force was measured by changing the frequency every 1 Hz in the range of 1 to 5 Hz (hertz) when currents of 0, 2, 4, and 6 A were caused to flow in the magnetic field generating unit 20 of the damper 1, respectively. An area surrounded by the graphs corresponds to a magnitude of energy absorbed by the damper 1 from vibrational energy held by the rod 50 and the piston 30 which reciprocally move. That is, the larger the area surrounded by the graphs is, the larger the energy absorbed by the damper 1 is (that is, damping force to be generated is large). The less the area surrounded by the graphs is, the less the energy absorbed by the damper 1 (hereinafter to be referred to as damping energy) is (that is, damping force to be generated is small). As shown in Figs. 4A to 4D, the area surrounded by the graphs increases as the magnitude of the frequency increases. That is, the higher the frequency becomes, the larger the damping energy becomes (that is, the larger the damping force to be generated becomes) in the damper 1.

Next, Fig. 5 shows relationship between the magnitude of the frequency and the magnitude of the damping energy when the magnitude of the current flowing in the magnetic field generating unit 20 is a predetermined magnitude. More specifically, damping energy was measured when the magnitude of the frequency was changed every 1 Hz in the range of 1 to 5 Hz when currents of 0, 3, and 6 A were caused to flow in the magnetic field generating unit 20 of the damper 1, respectively. As shown in Fig. 5, in any case where the magnitude of the current flowing in the magnetic field generating unit 20 is any one of 0, 3, and 6 A, the damping energy increases as the frequency increases. That is, from Fig. 5 also, it can be seen that the higher the frequency becomes, the larger the damping force to be generated becomes in the damper 1.

Next, Figs. 6A to 6C show relationship between displacement magnitude of the rod 50 with respect to the cylinder 10 and damping force when the magnitude of current flowing in the magnetic field generating unit 20 of the damper 1 is changed every predetermined magnitude when the frequency is 1 Hz. More specifically, Fig. 6A shows a case where the magnitude of current flowing in the magnetic field generating unit are 0, 1, 2, and 3 A, Fig. 6B shows a case where the magnitude of current flowing in the magnetic field generating unit are 3, 4, 5, and 6 A, and Fig. 6C shows a case where the magnitude of current flowing in the magnetic field generating unit are 0, 3, and 6 A. As shown in Figs. 6A to 6C, the area surrounded by the graphs increases as the magnitude of the current flowing in the magnetic field generating unit 20 increases. That is, the larger the magnitude of the current flowing in the magnetic field generating unit 20 becomes (that it, the stronger a magnetic field generated in the cylinder 10 becomes), the larger the damping energy becomes in the damper 1.

Next, Figs. 7A to 7C show relationship between displacement magnitude of the rod 50 with respect to the cylinder 10 and damping force when the magnitude of current flowing in the magnetic field generating unit 20 of the damper 1 is changed every predetermined magnitude when the frequency is 3 Hz. More specifically, Fig. 7A shows a case where the magnitude of current flowing in the magnetic field generating unit are 0, 1, 2, and 3 A, Fig. 7B shows a case where the magnitude of current flowing in the magnetic field generating unit are 3, 4, 5, and 6 A, and Fig. 7C shows a case where the magnitude of current flowing in the magnetic field generating unit are 0, 3, and 6 A. From Figs. 7A to 7C also, it can be seen that the area surrounded by the graphs increases as the magnitude of the current flowing in the magnetic field generating unit 20 increases. That is, from Figs. 7A to 7C also, it can be seen that the larger the magnitude of the current flowing in the magnetic field generating unit 20 becomes (that is, the stronger a magnetic field generated in the cylinder 10 becomes), the larger the damping energy becomes in the damper 1.

Next, Figs. 8A to 8C show relationship between displacement magnitude of the rod 50 with respect to the cylinder 10 and damping force when the magnitude of current flowing in the magnetic field generating unit 20 of the damper 1 is changed every predetermined magnitude when the frequency is 5 Hz. More specifically, Fig. 8A shows a case where the magnitude of current flowing in the magnetic field generating unit are 0, 1, 2, and 3 A, Fig. 8B shows a case where the magnitude of current flowing in the magnetic field generating unit are 3, 4, 5, and 6 A, and Fig. 8C shows a case where the magnitude of current flowing in the magnetic field generating unit are 0, 3, and 6 A. From Figs. 8A to 8C also, it can be seen that the area surrounded by the graphs increases as the magnitude of the current flowing in the magnetic field generating unit 20 increases. That is, from Figs. 8A to 8C also, it can be seen that the larger the magnitude of the current flowing in the magnetic field generating unit 20 becomes (that is, the stronger a magnetic field generated in the cylinder 10 becomes), the larger the damping energy becomes in the damper 1.

Next, Fig. 9 shows relationship between the magnitude of the current flowing in the magnetic field generating unit 20 and the magnitude of the damping energy when the magnitude of the frequency is a predetermined magnitude.

More specifically, damping energy was measured when the magnitude of the current flowing in the magnetic field generating unit 20 was changed every 1 Hz in the range of 0 to 6 A when the frequencies of the damper 1 were 1, 3, and 5 Hz, respectively. As shown in Fig. 9, in any case where the frequency is any one of 1, 3, and 5 Hz, the damping energy increases as the magnitude of the current flowing in the magnetic field generating unit 20 increases.

As described above, when the rod 50 and the piston 30 reciprocally move in the direction of the central axis of the cylinder 10, the plurality of elastomer particles 90 having characteristics of a permanent magnet and elasticity and filled in the cylinder 10 are elastically deformed in the damper 1. Frictional force between the elastomer particles 90 and elastic repulsive force of the elastomer particles 90 generated at this time allow the damper 1 to generate damping force. Since the elastomer particles 90 have elasticity, the adjacent elastomer particles 90 are elastically deformed, with the result that seizure between the elastomer particles 90 is less likely to be caused.

Furthermore, bonding force between the plurality of elastomer particles 90 is enhanced by the magnetic field generated in the cylinder 10 by the magnetic field generating unit 20 and the characteristics of a permanent magnet which the elastomer particles 90 each have. As the result, frictional force between the plurality of elastomer particles 90 becomes much larger, and accordingly the damping force of the damper 1 becomes much larger.

Thus, the damper 1 according to the present invention can also successfully generate damping force and easily adjust the damping force.

Furthermore, the elastomer particles 90 of the damper 1 have characteristics of a permanent magnet. Accordingly, bonding force between the plurality of elastomer particles 90 is enhanced in the damper 1 by the characteristics of a permanent magnet which the elastomer particles 90 each have, in addition to bonding force by the magnetic field generated in the cylinder 10 by the magnetic field generating unit 20, with the result that much larger damping force can be generated.

Furthermore, the magnetic field generating unit 20 of the damper 1 can freely change the strength of the magnetic field generated in the cylinder 10. Accordingly, when the strength of the magnetic field generated by the magnetic field generating unit 20 is changed in the damper 1, the bonding force between the elastomer particles 90 changes, with the result that the magnitude of damping force can be easily changed into a desired magnitude.

Furthermore, the damper 1 includes the piston 30 which is disposed in the cylinder 10 and coupled to the rod 50 reciprocally movable in the direction of the central axis of the cylinder 10, and reciprocally moves in the cylinder 10 together with the rod 50. Accordingly, the piston 30 moves to push away the elastomer particles 90 filled in the cylinder 10. As the result, the damper 1 can generate larger damping force as compared with the case where the piston 30 is not provided.

<Second Embodiment>

A damper 11 according to a second embodiment, as shown in Figs. 10A and 10B, is different from that in the first embodiment in the shape of a cylinder 110 serving as a case, the shape of a rod guide 170, rotation of a rod 150 and a rotor 40 around the central axis of the cylinder 110, i.e., around the axis of the cylinder 110, the shape of a magnetic field generating unit 120, the disposition of the magnetic field generating unit 120 with respect to the cylinder 110, and the like. Other components are same as those in the first embodiment. The same components are denoted by the same reference symbols respectively, and a detailed description thereof will be omitted.

The cylinder 110, as shown in Figs. 10A and 10B, has a cylindrical shape having openings at both ends thereof.

A first rod guide 171 serving as the rod guide 170 has a disk-like shape, and is coupled to the cylinder 110 so that the other surface of the first rod guide 171 abuts against one end face of the cylinder 110 so as to close one side of the cylinder 110. The center of the disk-like shape of the first rod guide 171 is formed with a first through hole 171A penetrating through the first rod guide 171 in a thickness direction thereof. The first through hole 171A on the other surface side of the first rod guide 171 is formed with a first stopper 171B which extends inward from the inner peripheral surface of the first through hole 171A in a flat plate shape. The inner diameter of the first stopper 171B is slightly larger than the outer diameter of the rod 150 (which will be described later). A shield bearing 60 is fitted in the first through hole 171 A, and one surface of the shield bearing 60 abuts against one surface of the first stopper 171 B.

A second rod guide 172 serving as the rod guide 170 has a disk-like shape, and is coupled to the cylinder 110 so that one surface of the second rod guide 172 abuts against the other end face of the cylinder 110 so as to close the other side of the cylinder 110. The center of the disk-like shape of the second rod guide 172 is formed with a second through hole 172A penetrating through the second rod guide 172 in a thickness direction of thereof. An intermediate part of the second through hole 172A penetrating the rod guide in the thickness direction is formed with a second stopper 172B which extends inward from the inner peripheral surface of the second through hole 172A in a flat plate shape. The inner diameter of the second stopper 172B is slightly larger than the outer diameter of the rod 150. The inner diameter of the second through hole 172A in an area between one surface of the second stopper 172B and one surface of the second rod guide 172 (hereinafter to be referred to as one side of the second through hole 172A) is larger than that in an area between the other surface of the second stopper 172B and the other surface of the second rod guide 172 (hereinafter to be referred to as the other side of the second through hole 172A). The shield bearing 60 is fitted in the other side of the second through hole 172A, and one surface of the shield bearing 60 abuts against the other surface of the second stopper 172B.

A third rod guide 173 serving as the rod guide 170 has a disk-like shape thicker than each of the first rod guide 171 and the second rod guide 172. The third rod guide 173 has a disk-like shape having an outer diameter almost equal to the inner diameter of the cylinder 110. The third rod guide 173 is fitted in one opening end 110A of the cylinder 110 and coupled to the first rod guide 171 with one surface of the disk-like shape thereof abutting against the other surface of the first rod guide 171. The center of the disk-like shape of the third rod guide 173 is formed with a third through hole 173A penetrating through the third rod guide 173 in a thickness direction thereof. The third through hole 173A on the other surface side of the third rod guide 173 is formed with a third stopper 173B which extends inward from the inner peripheral surface of the third through hole 173A in a flat plate shape. The inner diameter of the third stopper 173B is slightly larger than the outer diameter of a first end 40B of the rotor 40 (which will be described later).

A fourth rod guide 174 serving as the rod guide 170 has a disk-like shape thicker than each of the first rod guide 171 and the second rod guide 172 and thinner than the third rod guide 173. The fourth rod guide 174 has a disk-like shape having an outer diameter almost equal to the inner diameter of the cylinder 110. The fourth rod guide 174 is fitted in the other opening end 110A of the cylinder 110 and coupled to the second rod guide 172 with the other surface of the disk-like shape thereof abutting against one surface of the second rod guide 172. The center of the disk-like shape of the fourth rod guide 174 is formed with a fourth through hole 174A penetrating through the fourth rod guide 174 in a thickness direction thereof. The fourth through hole 174A on one surface side of the fourth rod guide 174 is formed with a fourth stopper 174B which extends inward from the inner peripheral surface of the fourth through hole 174A in a flat plate shape. The inner diameter of the fourth stopper 174B is slightly larger than the outer diameter of a second end 40C of the rotor 40.

The rotor 40 has a central part 40A, the first end 40B, and the second end 40C. The central part 40A is disposed between the other surface of the third rod guide 173 and one surface of the fourth rod guide 174, and has a cross-sectional shape orthogonal to the central axis of the cylinder 110 which is a square shape (see Fig. 10B). Ridges (hereinafter to be referred to ridges) are formed between two adjacent surfaces of the four surfaces forming the square shape.

Both ends of the central part 40A in the direction of the central axis of the cylinder 110 are each formed with a first plane 40D orthogonal to the central axis of the cylinder 110.

The first end 40B and the second end 40C have columnar shapes and extend from the centers of the two first planes 40D of the central part 40A respectively in opposite directions. The first end 40B and the second end 40C have respective sides away from the central part 40A which sides are each formed with a second plane 40E orthogonal to the central axis of the cylinder 110.

The rod 150 extends from the centers of the second planes 40E of the first end 40B and the second end 40C. That is, the rotor 40 is coupled to the rod 150. The rod 150 is coaxial with the first end 40B and the second end 40C. The rotor 40 is disposed in the cylinder 110.

The rod 150 is rotatably coupled to the first rod guide 171 and the second rod guide 172 via the shield bearings 60 fitted in the first rod guide 171 and the second rod guide 172 respectively. The first end 40B and the second end 40C are rotatably inserted into the third stopper 173B of the third through hole 173A of the third rod guide 173 and the fourth stopper 174B of the fourth through hole 174A of the fourth rod guide 174, respectively.

A thrust bearing 80 is disposed inside the third through hole 173A of the third rod guide 173 and is sandwiched by the second plane 40E of the first end 40B inserted into the third stopper 173B and the other surface of the first rod guide 171. The thrust bearing 80 is also disposed inside the fourth through hole 174A of the fourth rod guide 174 and is sandwiched by the second plane 40E of the second end 40C inserted into the fourth stopper 174B and one surface of the second rod guide 172. In this manner, the rod 150 and the rotor 40 both are rotatable around the central axis of the cylinder 110.

The magnetic field generating unit 120 is formed by coaxially winding a metal wire coated with an insulating film by a plurality of turns and bundling the metal wire into an annular shape having a predetermined width in the radial direction. In the damper 11, four magnetic field generating units 120 are disposed on the outer peripheral surface of the cylinder 110 so that respective one end sides of the annular shapes are arranged along the outer peripheral surface of the cylinder 110.

In the damper 11 formed as described above, the elastomer particles 90 filled in the cylinder 110 flow when the rod 150 and the rotor 40 rotate around the central axis of the cylinder 110. At this time, frictional force is generated between the inner peripheral surface of the cylinder 110 and the elastomer particles 90 in contact with the inner peripheral surface of the cylinder 110, between the adjacent elastomer particles 90, and between the surface of the central part 40A of the rotor 40 and the elastomer particles 90 in contact with the surface of the central part 40A of the rotor 40. Furthermore, the elastomer particles 90 are pushed and flattened by the central part 40A of the rotating rotor 40. At this time, elastic repulsive force generated by the elastomer particles 90 pushed and flattened by the central part 40A of the rotor 40 pushes back the central part 40A of the rotor 40. That is, damping force is generated in the direction opposite to the rotational direction of the rotor 40 in the damper 11 on the basis of the frictional force and the elastic repulsive force generated as described above.

Furthermore, when current having a predetermined magnitude is caused to flow in the metal wires drawn out from the four magnetic field generating units 120 of the damper 11, magnetic fields are generated around the magnetic field generating units 120. At this time, a magnetic field is generated in the cylinder 110 by the magnetic fields generated by the magnetic field generating units 120. As the result, bonding force between the elastomer particles 90 filled in the cylinder 110 is enhanced. As the result, frictional force between the elastomer particles 90 becomes large, and accordingly the damping force of the damper 11 becomes large.

As described above, when the rod 150 and the rotor 40 rotate around the central axis of the cylinder 110, the plurality of elastomer particles 90 haying characteristics of a permanent magnet and elasticity and filled in the cylinder 110 are elastically deformed in the damper 11. Frictional force between the elastomer particles 90 and elastic repulsive force of the elastomer particles 90 generated at this time allow the damper 11 to generate damping force. Since the elastomer particles 90 have elasticity, the adjacent elastomer particles 90 are elastically deformed, with the result that seizure between the elastomer particles 90 is less likely to be caused.

Furthermore, bonding force between the plurality of elastomer particles 90 is enhanced by the magnetic field generated in the cylinder 110 by the magnetic field generating unit 120 and the characteristics of a permanent magnet which the elastomer particles 90 each have. As the result, frictional force between the plurality of elastomer particles 90 becomes much larger, and accordingly the damping force of the damper 11 becomes much larger.

Thus, the damper 11 according to the present invention can also successfully generate damping force and easily adjust the damping force.

Furthermore, the damper 11 includes the rotor 40 which is disposed in the cylinder 110 and coupled to the rod 150 rotatable around the central axis of the cylinder 110, and rotates in the cylinder 110 together with the rod 150. Accordingly, the elastomer particles 90 filled in the cylinder 110 are elastically deformed when the rod 150 and the rotor 40 rotate around the central axis of the cylinder 110. Frictional force between the elastomer particles 90 and elastic repulsive force of the elastomer particles 90 generated at this time allow the damper 11 to generate damping force in the direction opposite to the rotational direction of the rod 150 and the rotor 40.

<Third Embodiment>

A damper 21 according to a third embodiment, as shown in Fig. 11A, is different from those in the first and second embodiments in that a magnet 45 serving as a permanent magnet is provided in a piston 230. Other components are same as those in the first embodiment. The same components are denoted by the same reference symbols, respectively, and a detailed description thereof will be omitted.

In the damper 21 according to the third embodiment, the magnet 45 is provided in the piston 230. The magnet 45 has characteristics of a permanent magnet and is formed in a columnar shape, for example, and is disposed in the piston 230 to have a central axis coaxial with the central axes of the rod 50 and the piston 230. The magnet 45 is magnetized so that, for example, one end side of the columnar shape has a north pole and the other side has a south pole. That is, the piston 230 has characteristics of a permanent magnet.

In the damper 21 formed as described above, when the piston 230 reciprocally moves in the direction of the central axis of the cylinder 10, the elastomer particles 90 move through a predetermined gap between the outer peripheral surface of the piston 230 and the inner peripheral surface of the cylinder 10. At this time, frictional force is generated between the inner peripheral surface of the cylinder 10 and the elastomer particles 90 in contact with the inner peripheral surface of the cylinder 10, between the adjacent elastomer particles 90, and between the outer peripheral surfaces of the rod 50 and the piston 230 and the elastomer particles 90 in contact with the outer peripheral surfaces of the rod 50 and the piston 230. The elastomer particles 90 located at the side to which the piston 230 moves are pushed and flattened by the piston 230. At this time, elastic repulsive force generated by the elastomer particles 90 pushed and flattened by the piston 230 pushes back the piston 230. That is, damping force is generated in the damper 21 on the basis of the frictional force and the elastic repulsive force generated as described above.

Furthermore, the magnet 45 disposed in the piston 230 attracts the elastomer particles 90 to the piston 230. As the result, frictional force generated between the outer peripheral surface of the piston 230 and the elastomer particles 90 brought into contact with the outer peripheral surface of the piston 230 becomes much larger in the damper 21. Accordingly, the damper 21 can generate much larger damping force.

As described above, when the rod 50 and the piston 230 reciprocally move in the direction of the central axis of the cylinder 10, the plurality of elastomer particles 90 having characteristics of a permanent magnet and elasticity and filled in the cylinder 10 are elastically deformed in the damper 21. Frictional force between the elastomer particles 90 and elastic repulsive force of the elastomer particles 90 generated at this time allow the damper 21 to generate damping force.

Furthermore, bonding force between the plurality of elastomer particles 90 is enhanced by the magnetic field generated in the cylinder 10 by the magnetic field generating unit 20 and the characteristics of a permanent magnet which the elastomer particles 90 each have. As the result, frictional force between the plurality of elastomer particles 90 becomes much larger, and accordingly the damping force of the damper 21 becomes much larger.

Thus, the damper 21 according to the present invention can also successfully generate damping force and easily adjust the damping force.

Furthermore, the piston 230 of the damper 21 has characteristics of a permanent magnet. Accordingly, frictional force between the piston 230 having characteristics of a permanent magnet and the elastomer particles 90 in contact with the surface of the piston 230 becomes much larger in the damper 21, with the result that the damping force of the damper 21 can be made much larger.

<Fourth Embodiment>

A damper 31 according to a fourth embodiment, as shown in Fig. 11B, is different from those in the first to third embodiments in that a magnet 145 serving as a permanent magnet is provided in a rotor 240. Other components are same as those in the second embodiment. The same components are denoted by the same reference symbols, respectively, and a detailed description thereof will be omitted.

In the damper 31 according to the fourth embodiment, the magnet 145 is provided in the rotor 240. The magnet 145 has characteristics of a permanent magnet and is formed in a columnar shape, for example, and is disposed in the rotor 240 to have a central axis coaxial with the central axes of the rod 150 and the rotor 240. The magnet 145 is magnetized so that, for example, one end side of the columnar shape has a north pole and the other side has a south pole. That is, the rotor 240 has characteristics of a permanent magnet.

In the damper 31 formed as described above, the elastomer particles 90 filled in the cylinder 110 flow when the rod 150 and the rotor 240 rotate around the central axis of the cylinder 110. At this time, frictional force is generated between the inner peripheral surface of the cylinder 110 and the elastomer particles 90 in contact with the inner peripheral surface of the cylinder 110, between the adjacent elastomer particles 90, and between the surface of a central part 240A of the rotor 240 and the elastomer particles 90 in contact with the surface of the central part 240A of the rotor 240. Furthermore, the elastomer particles 90 are pushed and flattened by the central part 240A of the rotating rotor 240. At this time, elastic repulsive force generated by the elastomer particles 90 pushed and flattened by the central part 240A of the rotor 240 pushes back the central part 240A of the rotor 240. That is, damping force is generated in the direction opposite to the rotational direction of the rotor 240 in the damper 31 on the basis of the frictional force and the elastic repulsive force generated as described above.

Furthermore, the magnet 145 disposed in the rotor 240 attracts the elastomer particles 90 to the central part 240A of the rotor 240. As the result, frictional force generated between the surface of the central part 240A of the rotor 240 and the elastomer particles 90 brought into contact with the surface of the central part 240A of the rotor 240 becomes much larger in the damper 31. Accordingly, the damper 31 can generate much larger damping force.

As described above, when the rod 150 and the rotor 240 rotate around the central axis of the cylinder 110, the plurality of elastomer particles 90 having characteristics of a permanent magnet and elasticity and filled in the cylinder 110 are elastically deformed in the damper 31. Frictional force between the elastomer particles 90 and elastic repulsive force of the elastomer particles 90 generated at this time allow the damper 31 to generate damping force. Since the elastomer particles 90 have elasticity, the adjacent elastomer particles 90 are elastically deformed, with the result that seizure between the elastomer particles 90 is less likely to be caused.

Furthermore, bonding force between the plurality of elastomer particles 90 is enhanced by the magnetic field generated in the cylinder 110 by the magnetic field generating unit 120 and the characteristics of a permanent magnet which the elastomer particles 90 each have. As the result, frictional force between the plurality of elastomer particles 90 becomes much larger, and accordingly the damping force of the damper 31 becomes much larger.

Thus, the damper 31 according to the present invention can also successfully generate damping force and easily adjust the damping force.

Furthermore, the rotor 240 of the damper 31 has characteristics of a permanent magnet. Accordingly, frictional force between the rotor 240 having characteristics of a permanent magnet and the elastomer particles 90 in contact with the surface of the rotor 240 becomes much larger in the damper 31, with the result that the damping force of the damper 31 can be made much larger.

The present invention is not limited to the first to fourth embodiments described above and explained with reference to the drawings. For example, the following embodiments are included in the technical field of the present invention.

(1) In each of the first to fourth embodiments, the magnetic field generating unit is disposed on the outer peripheral surface of the cylinder. However, for example, the magnetic field generating unit may be formed in the rod and the piston. More specifically, as in a damper 41 shown in Fig. 12A, a magnetic field generating unit 220 may be disposed in a piston 130 so that the central axis of the cylindrical magnetic field generating unit 220 is coaxial with the central axes of a rod 250 and the piston 130.

Furthermore, as in a damper 51 shown in Fig. 12B, a plurality of magnetic field generating units 320 each formed into an annular shape may be disposed inside four surfaces of a central part 140A of a rotor 140 forming a square shape so that one end sides of the annular shapes are arranged along the four surfaces, respectively. Both ends of metal wires drawn out from the magnetic field generating units 220 and 320 illustrated in Figs. 12A and 12B are arranged so that current flows from the outsides of the dampers 41 and 51 to the magnetic field generating units 220 and 320 through a slip ring and the like by way of the insides of the rod 250 and 350 on one side (not shown).

(2) In each of the first to fourth embodiments, magnitude of damping force of the damper is adjusted by causing current to flow in the magnetic field generating unit. However, for example, since induced electromotive force is generated in the magnetic field generating unit by a change in the number of magnetic lines of the elastomer particles penetrating the magnetic field generating unit, electric energy can also be extracted via the magnetic field generating unit from kinetic energy generated when the elastomer particles move in the cylinder. That is, the magnetic field generating unit can also be used as an electric generator.

(3) In each of the first to fourth embodiments, the magnetic field generating unit is provided on the outer peripheral surface of the case. However, the magnetic field generating units may be formed on the outer peripheral surface of the case and in the rod or the piston (rotor), both. In this case, current may be caused to flow in either one of the magnetic field generating units to adjust magnitude of damping force generated by the damper, and the other magnetic field generating unit may be used as an electric generator.

Alternatively, current may be caused to flow in both magnetic field generating units to adjust magnitude of damping force generated by the damper, or both magnetic field generating units may be used as electric generators.

(4) In each of the first and third embodiments, the cylindrical magnetic field generating unit has a predetermined width in the radial direction. However, the width of the radial direction of the cylindrical magnetic field generating unit may be partially increased or decreased. In this manner, it is possible to form a plurality of portions having different strength of magnetic field in the direction of the central axis of the cylinder. As the result, the magnitude of damping force to be generated can be changed according to the position in the direction of the central axis of the cylinder.

(5) In each of the first and third embodiments, one magnetic field generating unit is disposed on the outer peripheral surface of the cylinder. However, a plurality of cylindrical magnetic field generating units may be disposed to be aligned in the direction of the central axis of the cylinder so that the respective cylindrical insides of the magnetic field generating units are along the outer peripheral surface of the cylinder. In this case, current may be caused to flow in all the magnetic field generating units to adjust the magnitude of damping force. Alternatively, current may be caused to flow in some of the magnetic field generating units to adjust magnitude of damping force generated by the damper, and other magnetic field generating units may be used as electric generators.

(6) In the first to fourth embodiments, the elastomer particles are elastic bodies made of silicone rubber having a hardness of 60. However, the elastomer particles may be made of other materials as long as the materials are elastically deformable, or these materials may be compositely used. Furthermore, the hardness of the elastomer particles may range from 40 to 90.

(7) In each of the first to fourth embodiments, the sizes of the plurality of elastomer particles filled in the cylinder are uniform. However, elastomer particles having different particle diameters may be filled in the cylinder.

(8) In each of the first to fourth embodiments, the elastomer particles contain neodymium (Nd) particles. However, the elastomer particles may contain other materials as long as the materials have magnetism. The elastomer particles may compositely contain these materials.

(9) In each of the first to fourth embodiments, a magnetic field generating unit is formed by coaxially winding a metal wire by a plurality of turns. However, another configuration, for example, in which a permanent magnet disposed on the outer peripheral surface of the cylinder is freely caused to depart from or come close to the outer peripheral surface of the cylinder by using an actuator or the like, may be used.

(10) In each of the first to third embodiments, a gap is formed between the outer peripheral surface of the piston and the inner peripheral surface of the cylinder. However, a gap need not be always formed between the outer peripheral surface of the piston and the inner peripheral surface of the cylinder. That is, the space in the cylinder may be partitioned by the piston into two spaces.

(11) In each of the first to fourth embodiments, the rod projects from both opening ends of the cylinder to the outside of the cylinder. However, the rod may project from one side of the piston (rotor) and project from one of the opening ends of the cylinder to the outside of the cylinder.

(12) In each of the first to fourth embodiments, the magnetic field generating unit is disposed on the outer peripheral surface of the cylinder so that the cylindrical inside of the magnetic field generating unit is along the outer peripheral surface of the cylinder. However, for example, a plurality of magnetic field generating units may be disposed so that one end of each cylindrical shape is along the outer peripheral surface of the cylinder.

(13) In each of the second and fourth embodiments, ridges are formed between two adjacent surfaces of the four surfaces forming the square shape. However, the ridges are not limited to strict corners, and the ridges may be chamfered or may be formed by curved surfaces so that the two surfaces are continued.

(14) In each of the first to fourth embodiments, the piston or the rotor is provided. However, a rod only may be provided without a piston and a rotor.

REFERENCE NUMERALS

10, 110 ... cylinder (case)
20, 120, 220, 320 ... magnetic field generating unit
30, 130, 230 ... piston
50, 150, 250, 350 ... rod
40, 140, 240 ... rotor
90 ... elastomer particles (particles)

**Claims**

1. A damper comprising:

   a case (10, 110); and
   a rod (50, 150, 250, 350) projecting outside from the case (10, 110) and reciprocally movable in an axial direction or rotatable around an axis, **characterized by**:

      a plurality of particles (90) filled in the case (10, 110) and having characteristics of a permanent magnet and elasticity; and
      a magnetic field generating unit (20, 120, 220, 320) generating a magnetic field in the case (10, 110).

2. The damper according to claim 1, wherein the magnetic field generating unit (20, 120, 220, 320) can change strength of the magnetic field generated in the case (10, 110).

3. The damper according to claim 1 or 2, comprising a piston (30, 130, 230) which is disposed in the case (10) and coupled to the rod (50, 250) reciprocally movable in the axial direction, and reciprocally moves in the case (10) together with the rod (50, 250).

4. The damper according to claim 1 or 2, comprising a rotor (40, 140, 240) which is disposed in the case (110) and coupled to the rod (150, 350) rotatable around the axis, and rotates in the case (110) together with the rod (150, 350).

5. The damper according to claim 3, wherein the piston (230) has characteristics of a permanent magnet.

6. The damper according to claim 4, wherein the rotor (240) has characteristics of a permanent magnet.

# Fig. 1

EP 3 428 477 A1

# Fig. 2

Fig.3A

Fig.3B

Fig.4A

0A

Fig.4B

2A

Fig.4C

4A

Fig.4D

6A

EP 3 428 477 A1

# Fig. 5

Fig.6B

Fig.6A

Fig.6C

Fig.7A

Fig.7B

Fig.7C

Fig.8B

Fig.8A

Fig.8C

# Fig. 9

Fig.10A

Fig.10B

Fig.11A

Fig.11B

Fig.12A

Fig.12B

Europäisches
Patentamt

European
Patent Office

Office européen
des brevets

# EUROPEAN SEARCH REPORT

Application Number

EP 17 00 1190

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D<br>A | JP 2011 021648 A (NAGOYA INST TECHNOLOGY) 3 February 2011 (2011-02-03)<br>* paragraphs [0014], [0021], [0022]; figures 1, 3 * | 1-4<br>5,6 | INV.<br>F16F9/46<br>F16F7/01 |
| A | JP 2015 028365 A (NAGOYA INST TECHNOLOGY) 12 February 2015 (2015-02-12)<br>* paragraphs [0011], [0015], [0016]; figure 4 * | 1-4 | |
| A | JP 2015 222098 A (NAGOYA INST TECHNOLOGY) 10 December 2015 (2015-12-10)<br>* paragraph [0011] - paragraph [0012]; figures 1-3 * | 1-4 | |
| Y | DE 10 2013 017756 B3 (CVT INDUSTRIEBEDARF GMBH [DE]) 5 March 2015 (2015-03-05)<br>* paragraph [0034]; figures 1, 2 * | 1-4 | |

TECHNICAL FIELDS
SEARCHED (IPC)

F16F
B60G

The present search report has been drawn up for all claims

| Place of search | Date of completion of the search | Examiner |
|---|---|---|
| The Hague | 5 January 2018 | Sommer, Jean |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**
EP 17 00 1190

This annex lists the patent family members relating to the patent documents cited in the above-mentioned European search report.
The members are as contained in the European Patent Office EDP file on
The European Patent Office is in no way liable for these particulars which are merely given for the purpose of information.

05-01-2018

| Patent document cited in search report | Publication date | Patent family member(s) | Publication date |
|---|---|---|---|
| JP 2011021648    A | 03-02-2011 | NONE | |
| JP 2015028365    A | 12-02-2015 | NONE | |
| JP 2015222098    A | 10-12-2015 | NONE | |
| DE 102013017756 B3 | 05-03-2015 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011021648 A